# EUROPÄISCHE PATENTSCHRIFT

(11) **EP 2 261 069 B1**
(45) Veröffentlichungstag und Bekanntmachung des Hinweises auf die Patenterteilung: **04.09.2013**
(21) Anmeldenummer: 10162420.3
(22) Anmeldetag: 10.05.2010
(51) Int. Cl.: B60K 1/04

(54) **Fahrzeug sowie Elektrizitätsversorgungseinheit für ein Fahrzeug**
Vehicle and electricity supply unit for same
Véhicule et unité d'alimentation en électricité pour un véhicule

(30) Priorität: 11.05.2009 DE 102009020706
(43) Veröffentlichungstag der Anmeldung: 15.12.2010
(73) Patentinhaber: SCAMBIA Industrial Developments Aktiengesellschaft, 9494 Schaan (LI)
(72) Erfinder: Kleinhans, Ulrich, 73207, Plochingen (DE); Rimmelspacher, Bernhard, 76287 Rheinstetten (DE); Gentner, Wolfgang, 72711 Steinheim (DE); Riehle, Jörg, 71679 Asperg (DE)
(74) Vertreter: Hoeger, Stellrecht & Partner Patentanwälte

(56) Entgegenhaltungen:
- EP-A1- 0 947 376
- EP-A2- 1 481 838
- WO-A1-00/74964
- DE-A1- 3 121 698
- DE-A1- 10 107 080
- DE-A1-102007 023 391
- US-A1- 2006 076 836
- US-B1- 6 390 215

## Beschreibung

Die Erfindung betrifft ein Fahrzeug, umfassend eine Karosserie, eine Batterie und einen durch die Batterie betreibbaren Elektromotor zum Antreiben des Fahrzeugs in einem Fahrbetrieb.

Es sind durch einen Elektromotor antreibbare Fahrzeuge bekannt, wobei der Elektromotor von der Batterie gespeist wird.

Bei diesen Fahrzeugen, die üblicherweise für begrenzte Reichweiten konzipiert sind, besteht das Problem, dass diese zumindest sporadisch auch für größere Reichweiten eingesetzt werden. Ein Betreiben derartiger Fahrzeuge bei größeren Reichweiten würde es erforderlich machen, die Batterie während Fahrpausen aufzuladen oder auszutauschen.

All dies ist teilweise ungünstig, da die Infrastruktur für eine schnelle Aufladung oder einen schnellen Austausch der Batterie vielerorts nicht vorhanden ist.

Aus DE 3121698 A1 ist ein Fahrzeug gemäß Oberbegriff des Anspruchs 1 bekannt.

Der Erfindung liegt die Aufgabe zugrunde, ein Fahrzeug der gattungsgemäßen Art derart zu verbessern, dass dieses auch für größere Reichweiten einsetzbar ist.

Diese Aufgabe wird bei einem Fahrzeug mit den Merkmalen des Anspruchs 1 gelöst.

Der Vorteil dieser Lösung ist darin zu sehen, dass damit die Möglichkeit besteht, ohne eine lokale Infrastruktur sporadisch die Reichweite zur vergrößern.

Andererseits besteht die Möglichkeit dann, wenn das Fahrzeug lediglich bei begrenzter Reichweite und vorhandener Infrastruktur eingesetzt werden soll, die Elektrizitätsversorgungseinheit zu demontieren und so das Fahrzeug in dem Bereich begrenzter Reichweite mit optimalem energiesparendem Gewicht einzusetzen.

Unter dem Begriff Karosserie im Sinne der vorliegenden Anmeldung werden selbsttragende Karosserien oder auch ein Fahrzeugrahmen mit Fahrzeugaufbauten verstanden.

So sieht eine vorteilhafte Ausführungsform eines derartigen mechanischen Kopplungssystems vor, dass dieses einen heckseitigen, mit der Karosserie verbundenen Querträger umfasst, an welchem die Elektrizitätsversorgungseinheit montierbar ist.

Eine vorteilhafte Lösung sieht vor, dass das mechanische Kopplungssystem einen die Elektrizitätsversorgungseinheit tragenden Arm und eine an der Karosserie vorgesehene Aufnahme aufweist, und dass der Arm lösbar in der Aufnahme fixierbar ist.

Das heißt in diesem Fall ist kein am Querträger vorgesehener Kugelhals Teil des mechanischen Kopplungssystems, sondern ein Arm, der beispielsweise fest mit der Elektrizitätsversorgungseinheit verbindbar ist und lösbar in der Aufnahme am Querträger fixierbar ist, so dass der Arm stets mit der Elektrizitätsversorgungseinheit verbunden bleibt, jedoch das Lösen der Verbindung zwischen der Elektrizitätsversorgungseinheit und der Karosserie durch Lösen des Arms in der Aufnahme erfolgen kann.

Ein derartiges mechanisches Kopplungssystem ist ebenfalls bereits bei bekannten Fahrrad- oder Gepäckträgern im Einsatz.

Hinsichtlich der Ausbildung der Elektrizitätsversorgungseinheit wurden bislang keine näheren Angaben gemacht.

So sieht eine vorteilhafte Lösung vor, dass die Elektrizitätsversorgungseinheit ein Gehäuse umfasst.

Ein derartiges Gehäuse dient zunächst zur Aufnahme der Einheiten, die die Elektrizitätsversorgung des Fahrzeugs verbessern, insbesondere ein Aufladen der Batterie ermöglichen sollen.

Dabei schützt das Gehäuse diese Einheiten vor jeder Art von Umwelteinflüssen.

Das Gehäuse soll jedoch nicht nur einen Schutz für die Elektrizitätsversorgung bewirkenden Einheiten darstellen, sondern vorzugsweise ist das Gehäuse auch so ausgebildet, dass dieses ein definiertes Crashverhalten aufweist.

Das heißt, dass die Elektrizitätsversorgungseinheit aufgrund eines derart ausgebildeten Gehäuses mit zum Crashverhalten des Fahrzeugs in positiver Weise beiträgt.

Besonders günstig ist es dabei, wenn das Gehäuse eine Bodengruppe aufweist, welche das Crashverhalten des Gehäuses im Wesentlichen definiert.

Insbesondere kann dabei das Gehäuse, vorzugsweise die Bodengruppe, so ausgebildet sein, dass sie sich zumindest im Crashverhalten an einer Heckpartie der Karosserie abstützt und dabei das Crashverhalten der Karosserie zur Absorption von Energie ausnutzt.

Besonders vorteilhaft ist es dabei, wenn die Bodengruppe als aufprallenergieabsorbierendes Element ausgebildet ist und somit selbst ebenfalls zu einem positiven Crashverhalten der Karosserie, das heißt zu möglichst hoher Absorption von Energie aufgrund von Deformationen, beiträgt, um die Fahrgastzelle des Fahrzeugs möglichst optimal zu schützen.

Insbesondere ist es bei einer derartigen Lösung möglich, durch die Elektrizitätsversorgungseinheit auch das Crashverhalten des Fahrzeugs, insbesondere das Crashverhalten der Karosserie des Fahrzeugs, positiv zu beeinflussen, das heißt dieses nennenswert zu verbessern.

Hinsichtlich der Einheiten zur Versorgung des Fahrzeugs mit zusätzlicher elektrischer Energie, insbesondere zum Aufladen der Batterie, sind die unterschiedlichsten Lösungen denkbar.

Die einfachste Lösung sieht vor, dass die Energieversorgungseinheit mindestens einen Elektrizitätsspeicher umfasst, welcher dazu beiträgt, die elektrische Kapazität der Batterie in der Karosserie des Fahrzeugs signifikant zu erhöhen und somit auch die Reichweite des Fahrzeugs zu erhöhen. Vorzugsweise ist der Elektrizitätsspeicher oder sind die mehreren Elektrizitätsspeicher in dem Gehäuse der Elektrizitätsversorgungseinheit angeordnet.

Alternativ oder ergänzend dazu sieht eine vorteilhafte Lösung vor, dass die Elektrizitätsversorgungseinheit ein Elektrizitätserzeugungsmodul erfasst.

Ein derartiger Elektrizitätserzeugungsmodul hat den Vorteil, dass dieses ein geringeres Gewicht hat, als eine dieselbe Energie zur Verfügung stellende Batterie, so dass dieses aus Gründen der Gewichtsersparnis sehr vorteilhaft ist.

Dabei könnte das Energieerzeugungsmodul Strom zum unmittelbaren Betreiben des Antriebsmotors liefern.

Besonders günstig ist es jedoch, wenn das Elektrizitätserzeugungsmodul einen Ladestrom für die Batterie liefert und somit für eine geringere Leistung konzipiert werden kann, als dies im Fall eines unmittelbaren Betriebs des Antriebsmotors möglich wäre.

Im letztgenannten Fall stellt die Batterie einen Puffer dar, der es erlaubt, die gewünschte Fahrdynamik des Fahrzeugs zu realisieren und dabei den Antriebsmotor mit Strömen zu speisen, die mehr als das Fünffache oder noch besser mehr als das Zehnfache des von der Energieerzeugungseinheit erzeugten Stroms betragen.

Vorzugsweise ist dabei der Elektrizitätserzeugungsmodul in dem Gehäuse angeordnet.

Hinsichtlich der Ausbildung des Elektrizitätserzeugungsmoduls sind die unterschiedlichsten Lösungen denkbar.

Eine vorteilhafte Lösung sieht vor, dass das Elektrizitätserzeugungsmodul als Brennstoffzelle ausgebildet ist.

Eine derartige Brennstoffzelle ist besonders vorteilhaft, da diese dann, wenn sie keine sehr großen Leistungen, wie sie unmittelbar zum Antreiben des Fahrzeugs benötigt würden, erzeugen muss, sehr klein, kompakt und leistungsfähig ist.

Da beim vorliegenden Fahrzeug nicht die Aufgabe vorliegt, die für das Antreiben des Fahrzeugs notwendige elektrische Energie im jeweiligen Moment zur Verfügung zu stellen, sondern lediglich die Notwendigkeit besteht, die insgesamt während der Fahrtzyklen verbrauchte elektrische Energie wieder in die Batterie nachzuladen, erweist sich eine Brennstoffzelle mit bereits geringer Leistung als ausreichend, da eine derartige Brennstoffzelle, insbesondere wenn sie in der Elektrizitätsversorgungseinheit außerhalb der Karosserie angeordnet ist, völlig unabhängig von Fahr- und Stillstandszeiten des Fahrzeugs betrieben werden kann.

Besonders günstig ist es dabei, wenn die Brennstoffzelle eine mit Methanol betriebene Brennstoffzelle ist, da eine derartige, mit Methanol betriebene Brennstoffzelle sich aus Gründen der Umweltbilanz als vorteilhaft anbietet und im Übrigen Methanol ein einfach handhabbarer und unkritischer Betriebsstoff für eine derartige Brennstoffzelle darstellt.

Alternativ oder ergänzend dazu sieht eine weitere vorteilhafte Lösung vor, dass das Elektrizitätserzeugungsmodul als Stromaggregat, insbesondere als Stromaggregat mit einem Verbrennungsmotor, ausgebildet ist.

Ein derartiges Stromaggregat hat den Vorteil, dass hier bereits konventionelle Stromaggregate zur Verfügung stehen, die in einfacher Weise in das Gehäuse der Elektrizitätsversorgungseinheit eingebaut werden können und ein signifikant geringeres Gewicht als eine Batterie mit entsprechender Kapazität aufweisen.

Derartige mit einem Verbrennungsmotor versehene Stromaggregate können mit verschiedensten Brennstoffen betrieben werden.

Vorzugsweise ist dabei vorgesehen, dass das Stromaggregat mit fossilen Brennstoffen betreibbar ist, wobei insbesondere Diesel, Benzin oder Flüssiggas in Frage kommen.

Hinsichtlich der Brennstoffversorgung des Elektrizitätserzeugungsmoduls wurden bislang keine näheren Angaben gemacht.

So sieht eine vorteilhafte Lösung vor, dass in dem Gehäuse ein Brennstofftank für das Elektrizitätserzeugungsmodul angeordnet ist.

Vorzugsweise ist dabei der Brennstofftank auf einer einer Fahrbahn abgewandten Seite des Elektrizitätserzeugungsmoduls angeordnet, um den Brennstofftank insbesondere bei einem Heckaufprall oder Heckcrash möglichst optimal zu schützen oder so anzuordnen, dass dieser mit nur geringer Wahrscheinlichkeit beschädigt wird.

Hinsichtlich des Betriebs eines derartigen Elektrizitätserzeugungsmoduls wurden bislang keine näheren Angaben gemacht.

Beispielsweise wäre es denkbar, das Elektrizitätserzeugungsmodul abhängig von der für das Fahren verbrauchten Leistung zu betreiben.

Eine derartige variable Betriebsweise des Elektrizitätserzeugungsmoduls lässt jedoch dessen Wirkungsgrad sinken.

Aus diesem Grund ist vorzugsweise vorgesehen, dass dem Elektrizitätserzeugungsmodul eine Steuerung zugeordnet ist, welche das Elektrizitätserzeugungsmodul bei optimalem Wirkungsgrad, das heißt in einem Leistungsbereich oder bei nur einer Leistung, bei denen der Wirkungsgrad ein Maximum aufweist, betreibt, so dass stets eine optimale Energieumsetzung durch den Elektrizitätserzeugungsmoduls sicher gestellt ist.

Um dabei das Nachladen der Batterie möglichst optimal durchzuführen, ist vorgesehen, dass die Steuerung einen Ladezustand der Batterie überwacht und ein Laden der Batterie steuert.

Insbesondere lässt sich dabei mit einer derartigen Steuerung erreichen, dass die Steuerung den Elektrizitätserzeugungsmodul dann einschaltet, wenn der Ladezustand der Batterie ein definierbares Niveau, beispielsweise ein Niveau, ab dessen Unterschreiten die Batterie mit der beim optimalen Wirkungsgrad erzeugten elektrischen Leistung aufgeladen werden kann, unterschritten hat, und insbesondere dann abschaltet, wenn die Batterie voll aufgeladen ist.

Eine derartige Lösung erlaubt es, den Elektrizitätserzeugungsmodul völlig unabhängig von dem Betrieb des Fahrzeugs zu betreiben und somit das Nachladen der Batterie des Fahrzeugs lediglich von deren Ladezustand abhängig zu gestalten, so dass der Fahrbetrieb - so lange die Batterie eine ausreichende Energie noch zur Verfügung stellt - völlig unabhängig vom Betrieb des Elektrizitätserzeugungsmoduls und insbesondere der Elektrizitätsversorgungseinheit erfolgt.

Insbesondere kann dabei ein Elektrizitätserzeugungsmodul eingesetzt werden, dessen erzeugte elektrische Leistung erheblich, vorzugsweise um mehr als ein Faktor 2, noch besser mehr als einen Faktor 4, unter der im Durchschnitt beim Fahren mit dem Antriebsmotor verbrauchten Leistung liegt.

Hinsichtlich der Ausführung des Brennstofftanks wurden bislang keine näheren Angaben gemacht.

So sieht eine vorteilhafte Lösung vor, dass der Brennstofftank ein Kunststofftank ist, um insbesondere bei der Elektrizitätsversorgungseinheit Gewicht zu sparen.

Besonders günstig ist es, wenn der Brennstofftank ein faserverstärkter Kunststofftank ist, der damit einerseits sehr stabil ist und andererseits trotzdem ein geringes Gewicht aufweist.

Um außerdem den Elektrizitätsspeicher und/oder den Elektrizitätserzeugungsmodul in einem geeigneten Temperaturbereich in dem Gehäuse der Elektrizitätsversorgungseinheit betreiben zu können, ist vorzugsweise in dem Gehäuse eine Temperiereinheit vorgesehen, welche es erlaubt, eine entsprechende Temperierung der vorstehend genannten Einheiten vorzunehmen, um einen optimalen Betrieb zu gewährleisten.

Eine besonders optimale Ausführungsform einer derartigen Temperiereinheit sieht vor, dass diese in dem Gehäuse den Elektrizitätsspeicher und/oder den Elektrizitätserzeugungsmodul in einem definierten Betriebstemperaturbereich arbeiten lässt.

Hinsichtlich des Aufbaus der Temperiereinheit wurden dabei bislang keine näheren Angaben gemacht.

Besonders günstig ist es, wenn die Temperiereinheit mindestens ein Gebläse umfasst, welches in der Lage ist, durch Einblasen von Luft aus der Umgebung der Elektrizitätsversorgungseinheit eine Überhitzung des Elektrizitätsspeichers oder des Elektrizitätserzeugungsmoduls zu verhindern.

Um die Elektrizitätsversorgungseinheit einfach an der Karosserie montieren zu können, ist vorzugsweise vorgesehen, dass die Elektrizitätsversorgungseinheit mit Hilfe eines Montagewagens an der Karosserie montierbar und/oder demontierbar ist.

Ein derartiger Montagewagen hat den großen Vorteil, dass mit diesem die Möglichkeit besteht, die teilweise sehr schwere Elektrizitätsversorgungseinheit in einfacher Weise zur Karosserie zu bringen und an dieser zu montieren, wobei insbesondere der Montagewagen dazu dient, die Elektrizitätsversorgungseinheit zur Montage an der Karosserie exakt zu positionieren und im notwendigen Maße anzuheben.

Darüber hinaus dient der Montagewagen aber auch gleichzeitig dazu, die Elektrizitätsversorgungseinheit in einfacher Weise dann zu deponieren, wenn diese nicht an der Karosserie montiert werden soll und in einfacher Weise wiederum zur Karosserie zu bringen oder von der Karosserie weg zu bringen.

Insbesondere ist der Montagewagen so ausgebildet, dass er Hubeinrichtungen aufweist, mit welchen sich die Elektrizitätsversorgungseinheit in einfacher Weise anheben lässt, um diese in die richtige Höhenposition relativ zur Karosserie zu bringen.

Darüber hinaus betrifft die Erfindung noch eine Elektrizitätsversorgungseinheit für ein Fahrzeug umfassend eine Karosserie, eine Batterie und einen durch die Batterie betreibbaren Elektromotor zum Antreiben des Fahrzeugs in einem Fahrbetrieb, welche an einem Heckbereich der Karosserie mittels eines mechanischen Kopplungssystems lösbar montierbar ist und mit welcher Strom zur Erweiterung der Reichweite zur Verfügung gestellt wird.

Eine derartige Elektrizitätsversorgungseinheit hat den Vorteil, dass diese die Möglichkeit schafft, in einfacher Weise die Reichweite eines Fahrzeugs, das im Fahrbetrieb durch einen Elektromotor angetrieben ist, zu erhöhen, andererseits aber auch das Fahrzeug ohne diese Elektrizitätsversorgungseinheit mit geringerer Reichweite zu nutzen.

Es ist ein abnehmbarer Elektrizitätsspeicher und/oder -erzeuqer vorgesehen, als Range Extender für Elektro- und Hybridfahrzeuge als abnehmbares System.

Ein Elektrizitätsspeicher, in Form einer Batterie oder vergleichbare Energiespeicher, wird in einer Box über ein mechanisches Kopplungssystem befestigt. Der Strom wird von dem System über einen Stromladestecker, welcher auch dem standardisierten EU-Ladestecker entsprechen kann, übertragen bzw. in vorhandene Anhängerkupplungsstecker integriert, indem ein Stromladekabel mit eingebaut wird.

Anstatt oder zusätzlich zum Elektrizitätsspeicher kann auch noch ein Elektrizitätserzeugermodul mit eingebaut werden. Die können APU's, Brennstoffzeilen (z.B. Methanol-Brennstoffzellen), Gas-Stromaggregate oder übliche Notstromaggregate sein.

Das System dient dazu, bei Bedarf den zusätzlichen Energiespeicher oder Energieerzeuger auf der Anhängerkupplung mit zu befördern, um Elektrofahrzeuge oder elektrisch betriebene Hybridfahrzeuge bei Bedarf zusätzlich mit Energie zu versorgen. Das System kann damit als Range Extender bei Elektro- und Hybridfahrzeugen mit Stromerzeugern und Wechsel- bzw. Ersatzbatterie verwendet werden.

Die Box, in der der Energiespeicher bzw. Energieerzeuger transportiert wird, kann schallgedämmt, crashsicher und falls erforderlich klimatisiert (Druck, Temperatur, Entlüftung, Klimatisierung etc.) ausgestattet sein. Hier für werden zusätzliche Aggregate installiert bzw. angemessene Belüftungselemente mit eingebaut.

Zusätzlich kann das System mit einer einfachen Be- und Entladevorrichtung ausgeführt werden, womit man das kompletteSystem auf- oder absetzen kann und auf montieren Rädern bewegen kann. Das Heben des Systems geschieht über einen Hebemechanismus, der durch das Kippen der Haltestange oder durch ein elektrisches bzw. hydraulisches System auf- und abbewegt werden kann.

Weitere Merkmale und Vorteile der Erfindung sind Gegenstand der nachfolgenden Beschreibung sowie der zeichnerischen Darstellung einiger Ausführungsbeispiele.

Die Erfindung gemäß Anspruch 1 ist in den Figuren 9 bis 11 dargestellt.

In der Zeichnung zeigen:
- Fig. 1: eine schematische Seitenansicht eines ersten Ausführungs- beispiels eines Fahrzeugs;
- Fig. 2: eine schematische Rückansicht des ersten Ausführungsbeispiels des Fahrzeugs;
- Fig. 3: eine Seitenansicht ähnlich Fig. 1 des ersten Ausführungs- beispiels mit einem Montagewagen;
- Fig. 4: eine Darstellung ähnlich Fig. 3 eines zweiten Ausführungs- beispiels eines Fahrzeugs mit einem anderen Montagewagen;
- Fig. 5: eine Ansicht ähnlich Fig. 1 eines dritten Ausführungsbeispiels eines Fahrzeugs;
- Fig. 6: eine Ansicht ähnlich Fig. 2 des dritten Ausführungsbeispiels des Fahrzeugs;
- Fig. 7: eine schematische Darstellung einer funktionellen Aufteilung von Energieerzeugung sowie Energiespeicherung und Elektro- motor zwischen der Elektrizitätsver- sorgungseinheit und dem Fahrzeug beim dritten Ausführungs- beispiel;
- Fig. 8: eine Darstellung ähnlich Fig. 6 bei einem vierten Ausführungs- beispiel;
- Fig. 9: eine Darstellung ähnlich Fig. 1 eines fünften Ausführungsbei- spiels gemäß Anspruch 1;
- Fig. 10: einen Schnitt längs Linie 10-10 in Fig. 9 beim fünften Aus- führungsbeispiel;
- Fig. 11: einen Schnitt längs Linie 11-11 in Fig. 9;
- Fig. 12: eine Ansicht ähnlich Fig. 1 eines sechsten Ausführungsbei- spiels;
- Fig. 13: einen Schnitt längs Linie 13-13 in Fig. 12;
- Fig. 14: eine Ansicht ähnlich Fig. 1 eines siebten Ausführungsbeispiels;
- Fig. 15: einen Schnitt längs Linie 15-15 in Fig. 14;

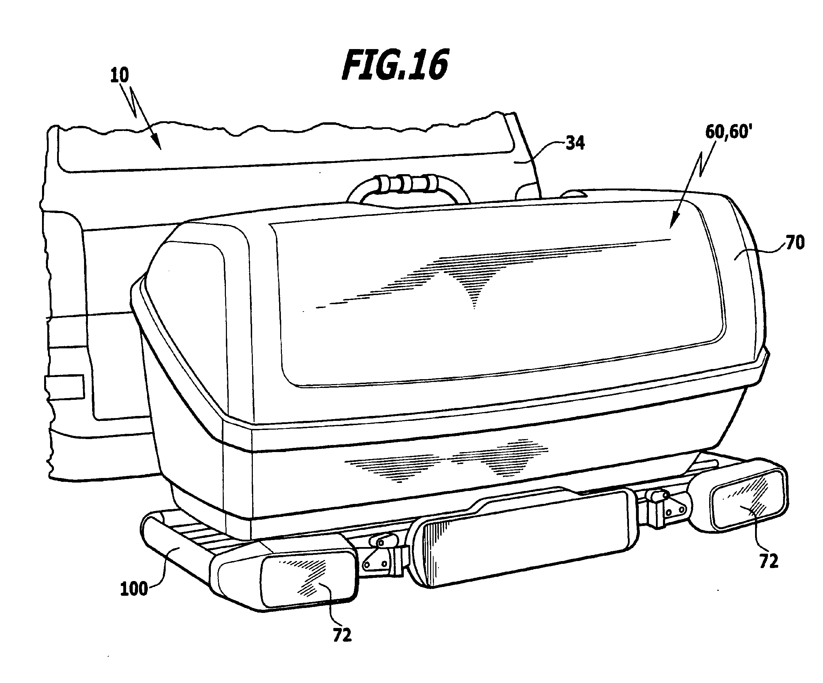

- Fig. 16: eine perspektivische Rückansicht eines achten Ausführungsbei- spiels;
- Fig. 17: eine schematische Darstellung des achten Ausführungsbeispiels des Fahrzeugs mit verschiedenen Möglich- keiten einer Ausrichtung der Energieversorgungseinheit mit verschiedenen Komponenten;
- Fig. 18: eine weitere Möglichkeit des achten Ausführungsbeispiels;
- Fig. 19: eine Darstellung ähnlich Fig. 17 des achten Ausführungsbei- spiels mit einem Montagewagen und
- Fig. 20: eine schematische Darstellung einer Reichweitenvergrößerung durch die Elektrizitätsversorgungseinheit.

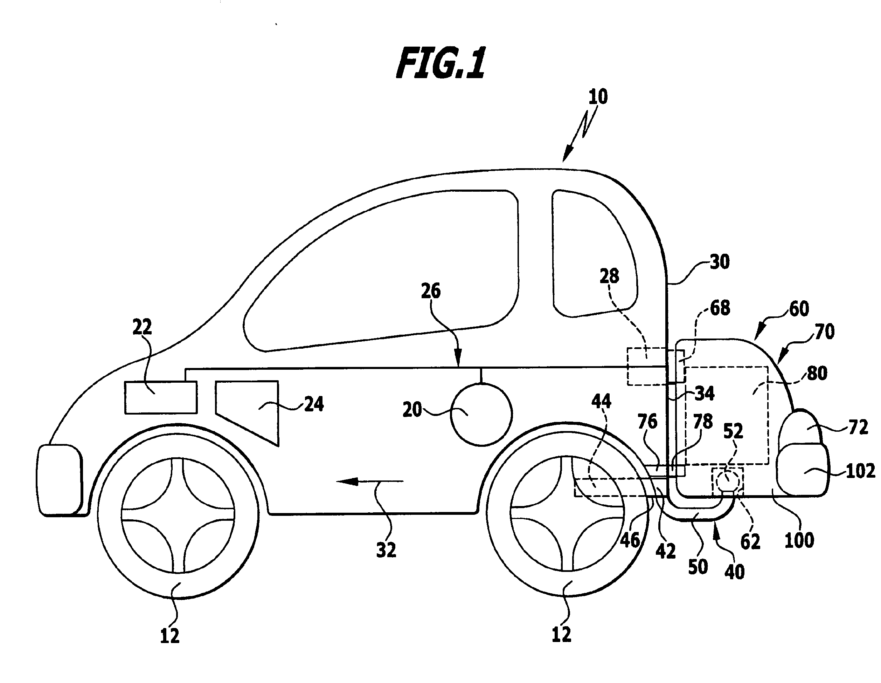

Ein erstes Ausführungsbeispiel eines Fahrzeugs, dargestellt in Fig. 1, umfasst eine Fahrzeugkarosserie 10, deren Räder 12 für einen Fahrbetrieb durch einen elektrischen Antriebsmotor 20 antreibbar sind, wobei der elektrische Antriebsmotor 20 beispielsweise aus einer für den Fahrbetrieb vorgesehenen Batterie 22 mit Strom versorgt wird.

Dabei kann zusätzlich zum elektrischen Antriebsmotor 20 noch ein Verbrennungsmotor 24 vorgesehen sein, so dass es sich um ein Hybridfahrzeug handelt, der Verbrennungsmotor 24 kann aber auch entfallen, so dass es sich um ein reines Elektrofahrzeug handelt.

Die Batterie 22 und der elektrische Antriebsmotor 20 sind durch ein Antriebsstromnetz 26 miteinander verbunden, welches auch noch eine Verbindung zwischen der Batterie 22 und einem Ladeanschluss, insbesondere einer Ladesteckdose 28, herstellt, so dass ein Laden der Batterie 22 durch extern zugeführten Ladestrom erfolgen kann.

Vorzugsweise ist dabei die Ladesteckdose 28 an einem Heckbereich 30 der Karosserie 10 angeordnet, und zwar vorzugsweise in einer quer zur Fahrtrichtung 32 verlaufenden Heckpartie 34, wobei die Ladesteckdose 28 entgegengesetzt zur Fahrtrichtung weist.

Ferner ist die Karosserie 10 mit einer mechanischen Kopplungsvorrichtung 40, wie sie beispielsweise für Fahrradträger-Systeme oder Ladebox-Systeme eingesetzt wird, versehen, welche beispielsweise so ausgebildet ist, dass diese einen Querträger 42 umfasst, welcher sich in einem, einer Fahrbahn zugewandten Bereich der Heckpartie 34 ebenfalls quer zur Fahrtrichtung 32 und ungefähr parallel zu einer Fahrbahn erstreckt und durch Längsträger 44 mit der Karosserie 10 verbunden ist, wobei die Längsträger 44 im Bereich einer Bodengruppe 46 der Karosserie 10 mit dieser verbunden sind, so dass auch der Querträger 42 fest mit der Bodengruppe 46 der Karosserie 10 verbunden ist.

Beispielsweise ist an dem Querträger 42 ein Kugelhals 50 vorgesehen, welcher sich ausgehend von dem Querträger 42 erstreckt und endseitig eine Kupplungskugel 52 trägt, die zur Aufnahme von Fahrradträger-Systemen oder Ladebox-Systemen vorgesehen ist, beispielsweise aber auch zum Anhängen eines Anhängers vorgesehen sein kann.

Bei einem Ausführungsbeispiel ist an dem Kugelhals 50, insbesondere der Kupplungskugel 52 eine als Ganzes mit 60 bezeichnete Elektrizitätsversorgungseinheit lösbar montiert, wobei die Elektrizitätsversorgungseinheit 60 eine Aufnahme 62 für die Kupplungskugel 52 und den Kugelhals 50 aufweist, welche Teil des mechanischen Kopplungssystems 40 ist und welche lösbar mit der Kupplungskugel 52 und dem Kugelhals 50 verbindbar ist, um die Elektrizitätsversorgungseinheit 60 lösbar und abnehmbar an der Karosserie 10 montieren zu können.

Darüber hinaus kann die Lösbarkeit der Elektrizitätsversorgungseinheit 60 von der Karosserie 10 auch noch dadurch realisiert werden, dass der Kugelhals 50 lösbar mit dem Querträger 42 verbunden ist, wie dies ebenfalls bei bekannten mechanischen Kopplungssystemen der Fall ist.

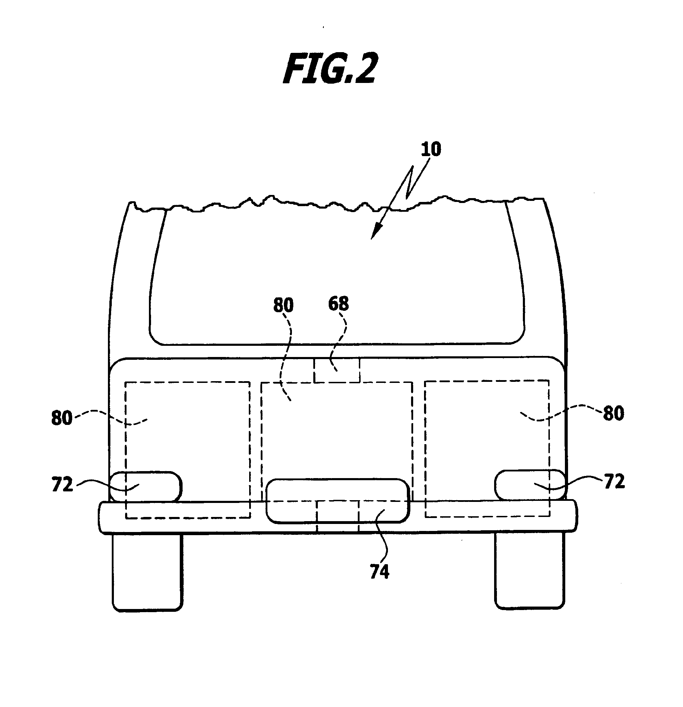

Wie in Fig. 1 und 2 dargestellt, umfasst die elektrische Elektrizitätsversorgungseinheit 60 ein Gehäuse 70, in welchem mindestens ein, beispielsweise aber auch mehrere Energiespeicher 80 vorgesehen sind, die im einfachsten Fall als elektrofahrzeugübliche Batterie ausgebildet sind.

Diese Energiespeicher 80 werden über einen in die Ladesteckdose 28 einsteckbaren Ladestecker 68 mit dem Antriebsstromnetz 26 verbunden und können somit zusätzlich elektrische Energie zum Fahren mit dem Fahrzeug zur Verfügung stellen.

Die abnehmbare Elektrizitätsversorgungseinheit 60 schafft somit die Möglichkeit, den mit elektrischer Energie realisierbaren Aktionsradius des Fahrzeugs dann zu erweitern, wenn dies wünschenswert ist, so dass die Möglichkeit besteht, ein konventionelles, beispielsweise für einen Stadtbereich geeignetes Elektrofahrzeug gegebenenfalls auch für Überlandfahrten tauglich zu machen, wenn dies gegebenenfalls erforderlich ist.

Ergänzend und alternativ dazu bietet die abnehmbare Elektrizitätsversorgungseinheit 60 aber auch noch die Möglichkeit, an entsprechenden Stationen entweder die Energiespeicher 80 oder die ganze Elektrizitätsversorgungseinheit 60 auszuwechseln und so gegebenenfalls die Reichweite des elektrischen Betriebs des Fahrzeugs zu vergrößern.

Damit dient die lösbar montierbare Elektrizitätsversorgungseinheit 60 als sogenannter "Range Extender" für das Fahrzeug.

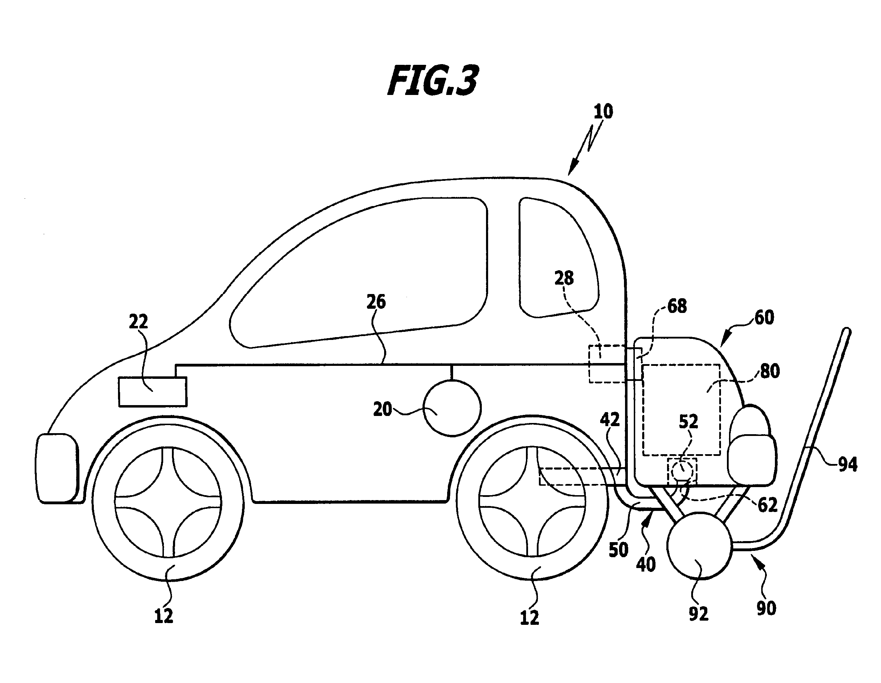

Um die Elektrizitätsversorgungseinheit 60 in einfacher Weise an der Karosserie 10 des Fahrzeugs montieren zu können, ist, wie in Fig. 3 dargestellt, bei dem ersten Ausführungsbeispiel noch zusätzlich ein Montagewagen 90 vorgesehen, welcher es erlaubt, die gesamte Elektrizitätsversorgungseinheit 60 abzustützen und abgestützt von der Fahrbahn weg anzuheben, so dass die Möglichkeit besteht, die Aufnahme 62 von der Kupplungskugel 52 und dem Kugelhals 50 zu lösen und somit mit dem Montagewagen 90, abgestützt durch dessen Räder 92, die Elektrizitätsversorgungseinheit 60 an einen Aufbereitungsort zu bewegen, wobei der Montagewagen 90 beispielsweise in der Form eines mit den zwei Rädern 92 versehenen Karrens ausgebildet ist, der mit einer Deichsel 94 ähnlich eines Sackkarrens verfahrbar ist, wobei beispielsweise ein Kippen des Montagewagens 90 ein geeignetes Anheben der Elektrizitätsversorgungseinheit 60 zum Herausbewegen der Kupplungskugel 90 aus der Aufnahme 62 ermöglicht.

Da sich die Elektrizitätsversorgungseinheit 60 mit dem Gehäuse 70 über die gesamte Breite der Heckpartie 34 erstreckt, ist das Gehäuse darüber hinaus, wie in Fig. 2 dargestellt, mit Rückleuchten 72 sowie einer Aufnahme 74 für ein Nummernschild versehen.

Die Rückleuchten 72 sind vorzugsweise über einen in eine konventionelle Anhängerkupplungssteckdose 76 einsteckbaren Anhängerkupplungsstecker 78 mit dem elektrischen System, insbesondere dem Beleuchtungssystem, der Karosserie 10 verbunden, so dass die Rückleuchten 72 dieselben Funktionen übernehmen können, wie die Rückleuchten am Heckbereich 30 der Karosserie.

Ferner ist vorzugsweise zur Crashsicherheit das Gehäuse 70 der Elektrizitätsversorgungseinheit 60 mit einer Bodengruppe 100 versehen, welche die Crashsicherheit gewährleistet und sich gegebenenfalls bei einem Aufprall eines Fahrzeugs oder eines Gegenstandes an der Karosserie 10 im Bereich der Heckpartie 34 und den für einen Crash an dieser vorgesehenen Komponenten abstützt, um somit die für einen Heckaufprall vorgesehenen Crasheigenschaften der Karosserie 10 auch im Fall der an der Karosserie 10 montierten Elektrizitätsversorgungseinheit 60 zu gewährleisten.

Beispielsweise ist hierzu die Bodengruppe 100 des Gehäuses 70 noch mit einem Stoßfänger 102 versehen, welcher die Funktionen des Stoßfängers im Bereich der Heckpartie 34 im Fall eines Heckaufpralls übernehmen kann.

Bei einer Variante des ersten Ausführungsbeispiels ist es ebenfalls möglich, die Ladesteckdose 28 und den Ladestecker 68 dadurch zu ersetzen, dass die Anhängekupplungssteckdose 76 und der Anhängekupplungsstecker 78 so modifiziert werden, dass über diese der von dem Elektrizitätsspeicher 80 dem Antriebsstromnetz 26 zugeführte Strom fließen kann, beispielsweise dadurch, dass die Anhängekupplungssteckdose 76 und der Anhängekupplungsstecker 78 zusätzlich mit Anschlüssen für ein Stromladekabel versehen werden.

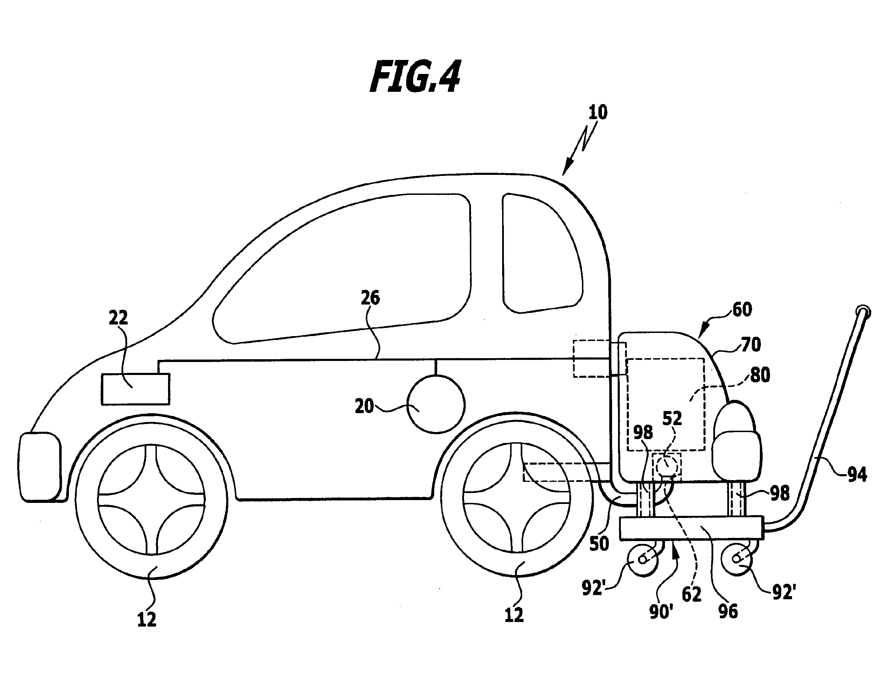

Bei einem zweiten Ausführungsbeispiel eines Fahrzeugs, dargestellt in Fig. 4, sind diejenigen Elemente, die mit denen des ersten Ausführungsbeispiels identisch sind, mit denselben Bezugszeichen versehen, so dass diesbezüglich vollinhaltlich auf die Ausführungen zum ersten Ausführungsbeispiel Bezug genommen werden kann.

Im Gegensatz zum ersten Ausführungsbeispiel ist bei dem zweiten Ausführungsbeispiel der Montagewagen 90' insoweit anders ausgebildet, als dieser anstelle der Räder 92 um vertikale Achsen drehbare Rollen 92' aufweist, die um diese vertikalen Achsen drehbar an einem Rollengestell 96 gehalten sind, so dass der Montagewagen 90' aufgrund der Drehbarkeit der Rollen 92' um die vertikale Achse relativ zum Rollengestell 96 in alle Richtungen verfahren werden kann.

Ferner sind am Rollengestell 96 Hubeinheiten 98, beispielsweise Hubzylinder, vorgesehen, mit welchen die Elektrizitätsversorgungseinheit 60 anhebbar ist, um die Aufnahme 62 von der Kupplungskugel 52 und dem Kugelhals 50 zu lösen oder die Elektrizitätsversorgungseinheit 60 mit der Aufnahme 62 auf die Kupplungskugel 52 und dem Kugelhals 50 aufzusetzen und an diesen zu fixieren.

Die Hubeinheiten 98 stellen beispielsweise einen Hebemechanismus dar, welcher ein elektrisches oder ein hydraulisches System aufweist, um die Elektrizitätsversorgungseinheit 60 relativ zu dem Rollengestell 96 und damit auch relativ zur Karosserie 10 anzuheben oder abzusenken.

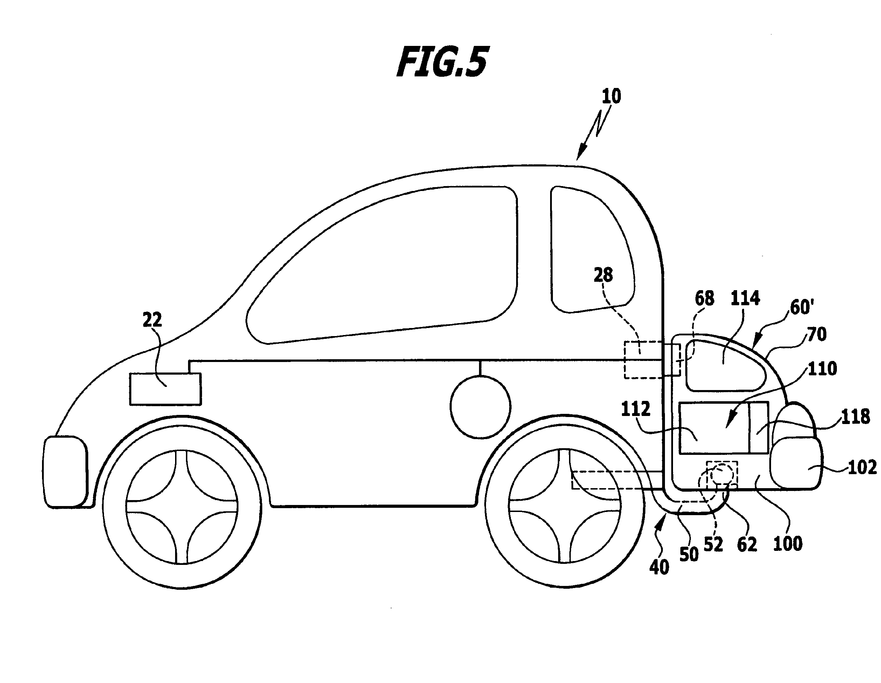

Bei einem dritten Ausführungsbeispiel eines Fahrzeugs, dargestellt in Fig. 5 sind diejenigen Elemente, die mit denen des ersten und zweiten Ausführungsbeispiels identisch sind, mit denselben Bezugszeichen versehen, so dass hinsichtlich der Beschreibung derselben vollinhaltlich auf die Ausführungen zu diesen Ausführungsbeispielen verwiesen werden kann.

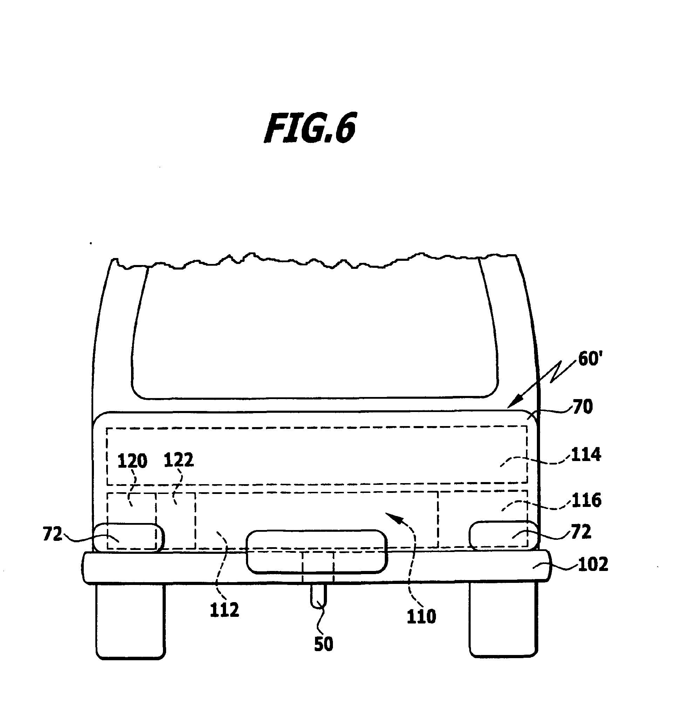

Im Gegensatz zum ersten Ausführungsbeispiel ist in dem Gehäuse 70 der Energieversorgungseinheit 60' kein Elektrizitätsspeicher 80 vorgesehen, sondern, wie in Fig. 5 und 6 dargestellt, sondern ein Elektrizitätserzeugermodul 110, welcher beispielsweise als Brennstoffzelle 112 ausgebildet ist und über der Brennstoffzelle 112 ist ein Brennstofftank 114 für einen Betriebsstoff der Brennstoffzelle 112 vorgesehen, wobei der Betriebsstoff beispielsweise Wasserstoff oder Methanol oder auch ein anderer, für eine fahrzeugtaugliche Brennstoffzelle 112 üblicher Brennstoff sein kann.

Um die Brennstoffzelle 112 in der Elektrizitätsversorgungseinheit 60' autark betreiben zu können, ist vorzugsweise noch zusätzlich zu der Brennstoffzelle 112 eine Batterie 116 vorgesehen, welcher ein Starten der Brennstoffzelle unabhängig von der Batterie 22 in der Karosserie 10 erlaubt.

Ferner ist die Brennstoffzelle 112 vorzugsweise noch mit einer Steuerung 118 versehen, welche einen Ladevorgang sowohl der Batterie 116 als auch der Batterie 22 im Kraftfahrzeug steuert und so ausgebildet ist, dass diese den Ladezustand der Batterie 22 im Kraftfahrzeug und gegebenenfalls auch den Ladezustand der Batterie 116 erfasst und unabhängig vom Betrieb des Kraftfahrzeugs bei einem unterhalb des Vollladezustands liegenden Ladezustand die Batterie 22 und/oder die Batterie 116 nachlädt, so dass beispielsweise auch bei jeder Fahrtunterbrechung des Kraftfahrzeugs ein Nachladen der Batterie 22 automatisch erfolgt.

Wird als Brennstoffzelle 112 beispielsweise eine Brennstoffzelle des Herstellers EFOY, insbesondere eine Brennstoffzelle EFOY pro Series, verwendet, so ist in diese bereits die Steuerung 118 integriert, welche über ihren integrierten Laderegler als Steuerung kontinuierlich den Ladezustand der Bordbatterie 22 des Elektrofahrzeugs überwacht. Sinkt dieser Ladezustand unter einen bestimmten Schwellwert, schaltet die Brennstoffzelle 112 automatisch ein und lädt die Batterie 22 wieder auf. Sobald die Batterie 22 voll ist, schaltet die Brennstoffzelle 112 automatisch wieder in einen Stand-By-Modus zurück. All dies erfolgt ohne jeglichen Benutzereingriff. Vielmehr bewirkt die Brennstoffzelle 112, dass die Batterie 22 zu jeder Zeit in einem möglichst hohen Ladezustand und das Fahrzeug somit möglichst jederzeit fahrbereit ist. Insbesondere ist die Brennstoffzelle der Firma EFOY eine Methanol-Brennstoffzelle, so dass der Brennstofftank 114 als Methanoltankpatrone ausgebildet sein kann, der an üblichen Verkaufsstellen angeboten wird und folglich lediglich ein Austausch der Tankpatrone erforderlich ist, um die Brennstoffzelle 112 weiterzubetreiben.

Insbesondere läuft die Brennstoffzelle 112 im Nennbetrieb bei maximalem Wirkungsgrad, während die Batterie 22 als Lastwechselpuffer dient und die Energie für das dynamische Fahren mit dem Elektromotor 20 liefert.

Beispielsweise liefert dabei eine Tankpatrone des Brennstofftanks 114 bis zu 31 kWh. Durch diese Entkopplung der Batterie 22 und des Elektromotors 20, die in der Karosserie 10 des Kraftfahrzeugs angeordnet sind, und den Elektrizitätserzeugermodul 110 in der Elektrizitätsversorgungseinheit 60' mit dem Brennstofftank 114 ist eine optimale Möglichkeit zur Reichweitenoptimierung von Elektrofahrzeugen geschaffen, die üblicherweise Reichweiten zulässt die größer sind als die Reichweiten die für einen Stadtverkehr notwendig sind.

Darüber hinaus ist noch in dem Gehäuse 70 der Elektrizitätsversorgungseinheit 60' eine Temperiereinheit 70 vorgesehen, welche in der Lage ist, den Elektrizitätserzeugungsmodul 110, in diesem Fall die Brennstoffzelle 112 in dem Gehäuse 70 vor Überhitzung zu schützen.

Beispielsweise ist die Temperiereinheit 120 so ausgebildet, dass sie ein Gebläse 122 aufweist, welches außerhalb des Gehäuses 70 Luft ansaugt und diese Luft zum Elektrizitätserzeugungsmodul 110 bläst, um diesen zu kühlen.

Ferner sind dann noch in dem Gehäuse 70 Luftaustrittsöffnungen vorgesehen, welche die Luft nach Kühlung des Elektrizitätserzeugungsmoduls 110 aus dem Gehäuse 70 austreten lassen.

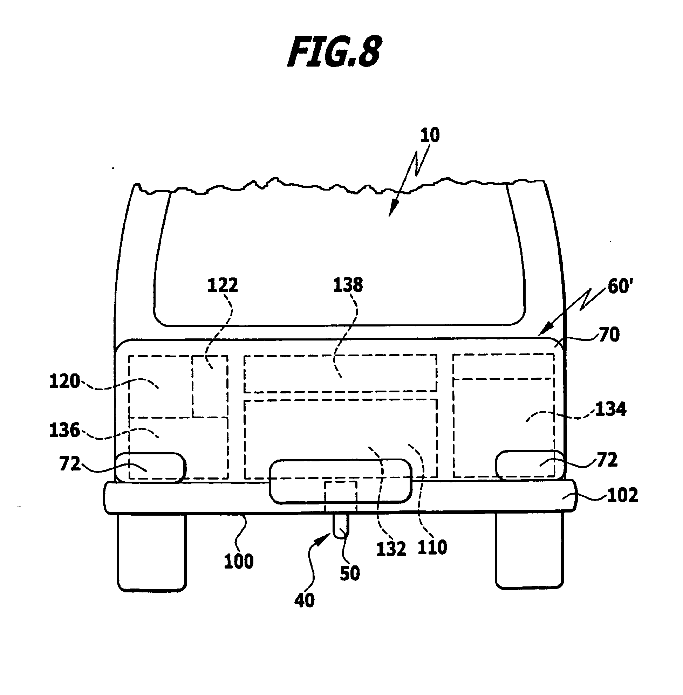

Bei einem vierten Ausführungsbeispiel eines Fahrzeugs, dargestellt in Fig. 8, ist die Elektrizitätsversorgungseinheit 60' ebenfalls mit einem Elektrizitätserzeugermodul 110 versehen, welcher in diesem Fall allerdings als Stromaggregat 132 ausgebildet ist, das mit einem konventionellen Verbrennungsmotor arbeitet, um den Ladestrom für die Batterie 22 zu erzeugen.

Das Stromaggregat 132 kann dabei ein konventionell erhältliches Notstromaggregat sein, welches mit fossilen Brennstoffen betreibbar ist. Als Brennstoffe kommen dabei in Frage sowohl Benzin als auch Diesel oder auch Gas, wenn der Verbrennungsmotor auf einen Gasbetrieb umgerüstet ist.

In diesem Fall ist es beispielsweise denkbar, als Brennstofftank 134 eine handelsübliche Gasflasche oder einen handelsüblichen Flüssigkeitsgastank zu verwenden, mit denen das Stromaggregat 132 betreibbar ist.

Im Fall eines mit Benzin oder Diesel betriebenen Stromaggregats 132 ist der Brennstofftank 134 ein konventioneller Tank für flüssigen Betriebsstoff.

Ferner ist zusätzlich zum Brennstofftank 134 eine Batterie 136 vorgesehen, welche eine autarken Betrieb des Stromaggregats 132 ermöglicht, das heißt, dass das Stromaggregat 132 gesteuert durch eine Steuerung 136 an- und abgeschaltet werden kann, völlig unabhängig vom Betrieb des Fahrzeugs.

Auch die Steuerung 138 arbeitet in gleicher Weise wie die Steuerung 118 der Brennstoffzelle 112, das heißt die Steuerung 138 überwacht den Ladezustand der Batterie 22 und startet bei Unterschreiten eines bestimmten Werts des Ladezustands das Stromaggregat 132, um die Batterie 22 wieder aufzuladen, und zwar völlig unabhängig vom Fahrbetrieb des Fahrzeugs, so dass auch bei allen Stillstandszeiten des Fahrzeugs eine Aufladung der Batterie 22 erfolgt, wenn es nötig ist.

Auch das Stromaggregat 132 mit Verbrennungsmotor wird vorzugsweise ausschließlich im optimalen Betriebszustand bei maximalem Wirkungsgrad betrieben, so dass die Batterie 22 als Puffer für den Lastwechsel und das dynamische Fahren des Fahrzeugs dient.

Vorzugsweise ist auch bei der Elektrizitätsversorgungseinheit 60' eine Temperiereinheit 120 in dem Gehäuse 70 vorgesehen, deren Gebläse 122 zumindest dass das Stromaggregat 132 ausreichend gekühlt wird und somit nicht überhitzen kann, sondern bei optimalen Betriebstemperaturen gehalten werden kann.

Im Übrigen ist das vierte Ausführungsbeispiel hinsichtlich der anderen, nicht näher beschriebenen Merkmale identisch mit den voranstehenden Ausführungsbeispielen, so dass auf die Ausführungen zu den voranstehenden Ausführungsbeispielen vollinhaltlich Bezug genommen werden kann.

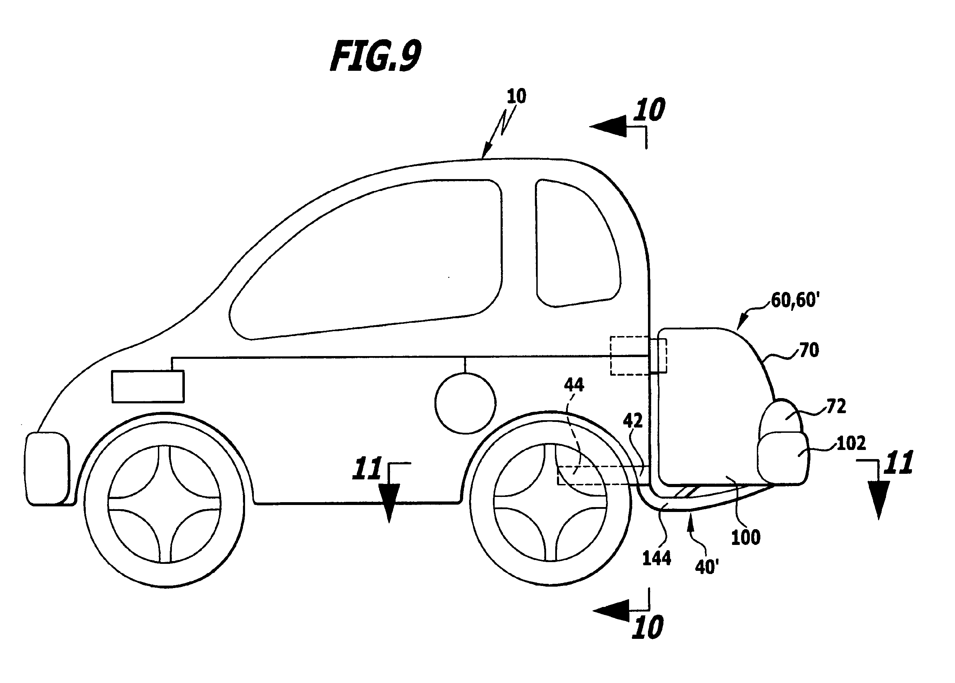

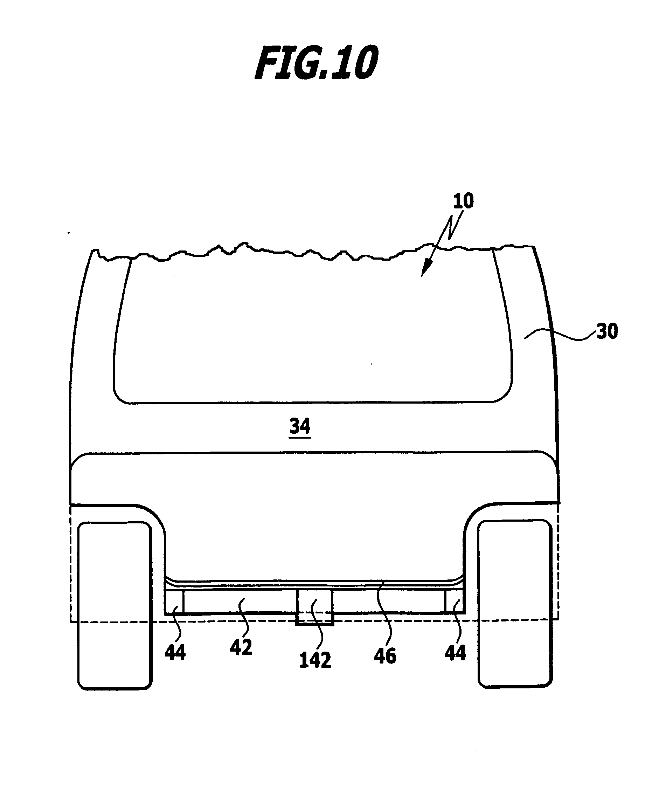

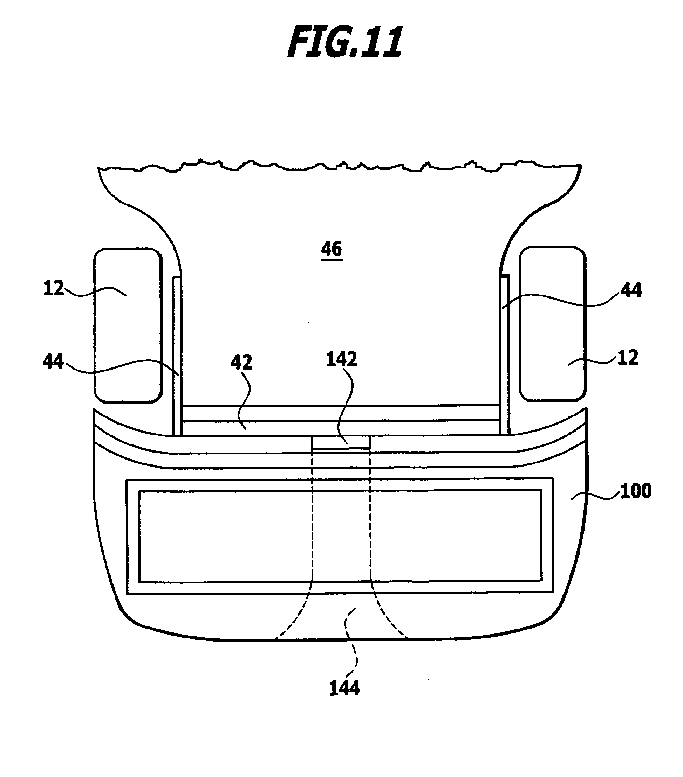

Bei einem fünften unter den Anspruch 1 fallenden Ausführungsbeispiel, dargestellt in den Fig. 9 bis 11 ist die Elektrizitätsversorgungseinheit 60 oder 60' in gleicher Weise ausgebildet, wie im Zusammenhang mit den einzelnen voranstehenden Ausführungsbeispielen beschrieben.

Im Gegensatz zu den voranstehenden Ausführungsbeispielen ist das mechanische Kopplungssystem 40' ein anderes, ebenfalls im Zusammenhang mit Fahrradträger-Systemen oder Ladebox-Systemen verwendetes Kopplungssystem.

Dieses Kopplungssystem umfasst ebenfalls den Querträger 42 der an Längsträgern 44 gehalten ist, die ihrerseits mit der Karosserie 10 in gleicher Weise wie im Zusammenhang mit den voranstehenden Ausführungsbeispielen beschrieben, verbunden sind.

Bei diesem Ausführungsbeispiel ist allerdings ein lösbar am Querträger 42 in einer Aufnahme 142 fixierbarer Arm 144 an der Bodengruppe 100 des Gehäuses 70 fest montiert, so dass die Elektrizitätserzeugungseinheit 60 oder 60' dadurch von der Karosserie 10 lösbar ist, dass die Verbindung des Arms 144 mit der Aufnahme 142 am Querträger 42 gelöst wird, wobei hier eine üblicherweise verwendete Fixiereinrichtung zum Fixieren des Arms 144 in der Aufnahme 142 zum Einsatz kommt.

Soll andererseits wiederum die Elektrizitätsversorgungseinheit 60 oder 60' an der Karosserie 10 montiert werden, erfolgt ein Fixieren des Arms 144 in der am Querträger 42 vorgesehenen Aufnahme 142.

In diesem Fall ist die Verbindung zwischen der Bodengruppe 100 des Gehäuses 70 und der Karosserie 10 stabiler, so dass die Elektrizitätsversorgungseinheit 60 oder 60' schwerer sein kann als die für eine Anhängekupplung mit dem Kugelhals 50 und der Kupplungskugel 52 vorgesehene übliche Stützlast.

Hinsichtlich der Ausbildung der Elektrizitätsversorgungseinheit 60 oder 60' im Einzelnen sowie auch der Ausbildung der Karosserie 10 und der gesamten Funktionen der Elektrizitätsversorgungseinheit 60 wird vollinhaltlich auf die Ausführungen zu den voranstehenden Ausführungsbeispielen Bezug genommen.

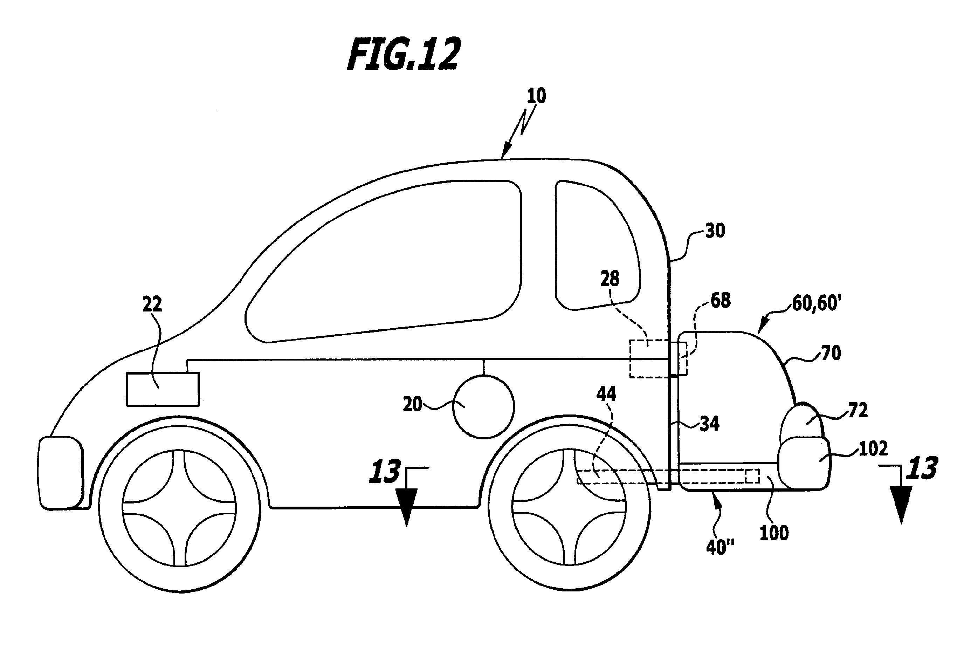

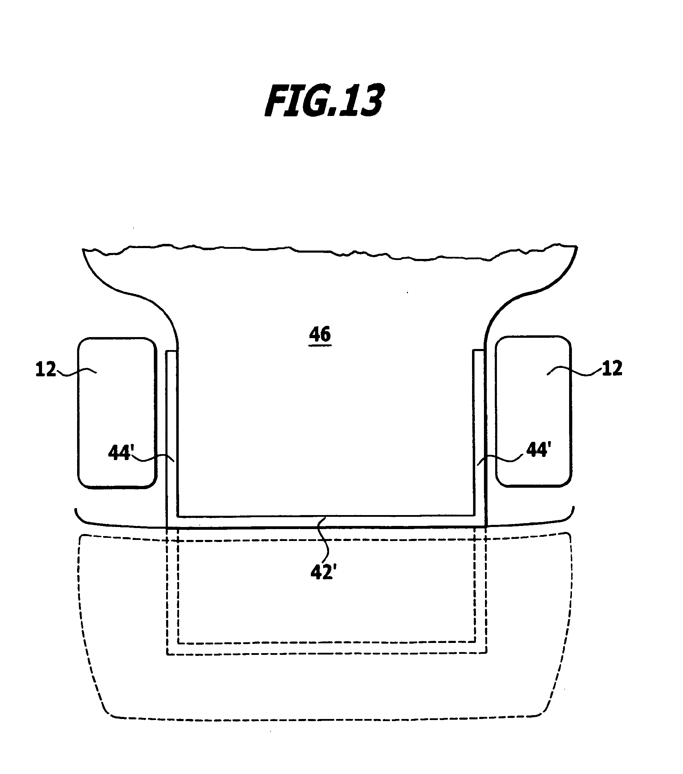

Bei einem sechsten Ausführungsbeispiel eines Fahrzeugs, dargestellt in Fig. 12 und 13, umfasst das mechanische Kopplungssystem 40" ebenfalls den Querträger 42 und die Längsträger 44', die allerdings so ausgebildet sind, dass diese ausziehbar sind, so dass der Querträger 42' von einer in Fig. 13 dargestellten eingeschobenen Stellung, in welcher dieser von der Heckpartie 34 verdeckt ist, in eine in Fig. 13 gestrichelt dargestellte ausgezogene Stellung bewegbar ist, in welcher dieser über die Heckpartie 34 der Karosserie 10 übersteht und somit zur Aufnahme der Bodengruppe 100 der lösbar montierbaren Elektrizitätsversorgungseinheit 60 oder 60' dient, so dass die Möglichkeit besteht, das Gehäuse 70, insbesondere die Bodengruppe 100 desselben, stabil mit der Karosserie 10 zu verbinden, um insbesondere auch im Bereich des Gehäuses 70 das gewünschte Verhalten bei einem Heckaufprall, insbesondere die gewünschte Crashsicherheit bei einem Heckaufprall, zu erhalten.

In diesem Fall besteht insbesondere die Möglichkeit, dass sich die Bodengruppe 100 des Gehäuses 70 bei einem Heckaufprall über die Längsträger 44 an der Karosserie 10 abstützt und somit die an der Karosserie 10 vorhandenen Crasheigenschaften ausnutzt als auch selbst vorteilhafte Crasheigenschaften aufweist.

Beispielsweise besteht die Möglichkeit, die Bodengruppe 100 als sich bei einem Heckaufprall in der gewünschten Art und Weise deformierendes Element, beispielsweise als Crashelement, auszubilden, das in der Lage ist, Aufprallenergie durch Deformation aufzunehmen.

Damit lassen sich durch die Bodengruppe 100 noch zusätzlich die Crasheigenschaften der Karosserie bei montierter Elektrizitätsversorgungseinheit 60 oder 60' verbessern, zumindest jedoch in vergleichbarer Weise wie bei der Karosserie 10 gestalten.

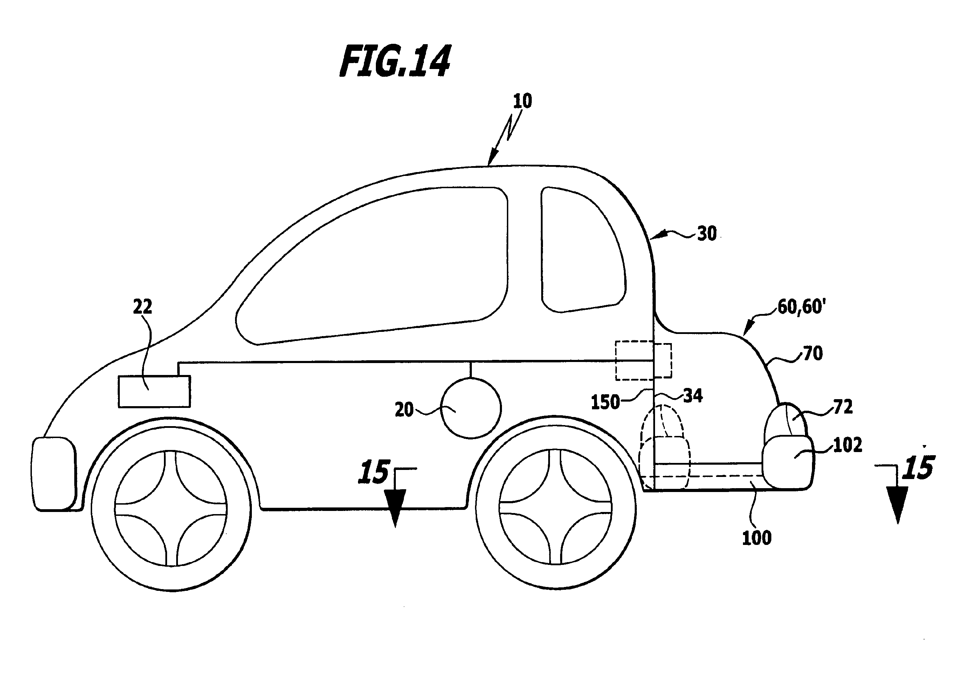

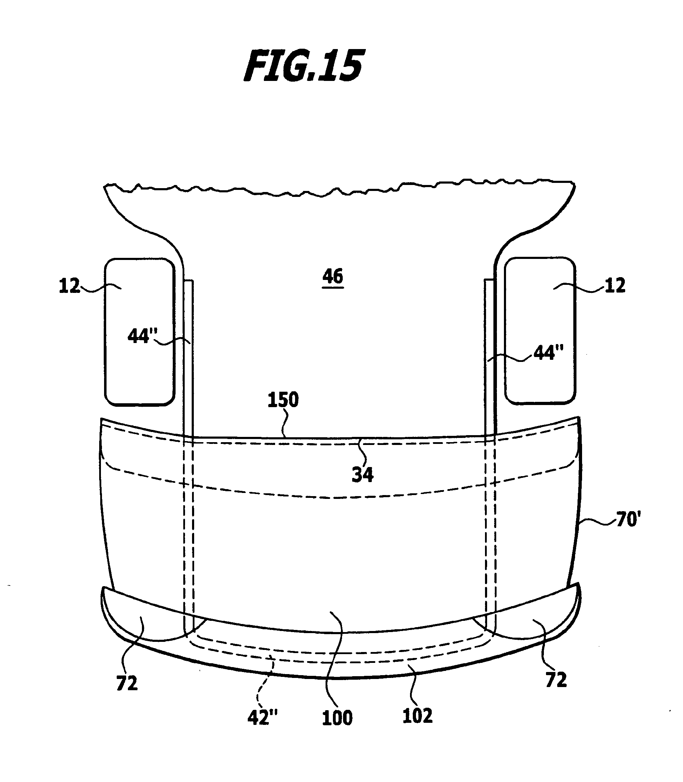

Bei einem siebten Ausführungsbeispiel, dargestellt in den Fig. 14 und 15 ist zum Fixieren der Bodengruppe 100 des Gehäuses 70 der Elektrizitätsversorgungseinheiten 60 oder 60' ebenfalls ein Querträger 42" vorgesehen, welcher allerdings zusammen mit dem Stoßfänger 102 und den am Stoßfänger 102 gehaltenen Rückleuchten 72 der Karosserie eine Einheit bildet, wobei diese gesamte Einheit aufgrund der Längenverschiebbarkeit der Längsträger 44" von einer eingeschobenen Position, in welcher der Stoßfänger 102 an der Heckpartie 34 der Karosserie 10 anliegt, gestrichelt dargestellt in Fig. 14 und 15, in eine ausgezogene Position, dargestellt in den Fig. 14 und 15 mit durchgezogenen Linien, bewegbar ist, in welcher das Gehäuse 70 mit der Bodengruppe 100 zwischen dem Stoßfänger 102 in der ausgezogenen Position und der Heckpartie 34 der Karosserie einsetzbar ist und dabei auf den ausgezogene Längsträgern 44" aufliegt.

Ferner ist das Gehäuse 70' so ausgebildet, dass eine der Heckpartie 34 zugewandte Frontpartie 150 desselben an der Heckpartie 34 der Karosserie 10 formangepasst anliegen kann, so dass optisch das Gehäuse 70 als an die Karosserie 10 im Bereich der Heckpartie 34 angepasst erscheint und auch das Karosseriedesign der Karosserie 10 aufnimmt.

Beispielsweise besteht die Möglichkeit, zwischen der Frontpartie 150 des Gehäuses 70' und der Heckpartie 34 der Karosserie 10 elastische Gummielemente vorzusehen, die ein unmittelbares Anliegen der Frontpartie 150 des Gehäuses 70' an der Heckpartie 34 erlauben und somit sich optisch das Aussehen eines üblichen Karosseriespalts ergibt.

Darüber hinaus hat diese Lösung den Vorteil, dass sich in diesem Fall das Crashverhalten des Fahrzeugs mit Elektrizitätsversorgungseinheit 60 oder 60' an das Crashverhalten des Fahrzeugs 10 ohne Elektrizitätsversorgungseinheit 60 oder 60' anpassen oder sogar noch verbessern lässt, da die Bodengruppe 100 des Gehäuses 70' ebenfalls als Crashmodul ausgebildet werden kann und somit Aufprallenergie durch Deformation absorbieren kann.

Dieses Beispiel hat darüber hinaus auch noch den Vorteil, dass keine separate elektrische Versorgung für die Rückleuchten 72 erforderlich ist, da in allen Stellungen des Stoßfängers 102 mit den Rückleuchten 72 in gleicher Weise von dem Beleuchtungssystem der Karosserie 10 versorgt werden.

Hinsichtlich der übrigen Merkmale wird vollinhaltlich auf die Ausführungen zu den voranstehenden Ausführungsbeispielen, insbesondere zu den ersten vier voranstehenden Ausführungsbeispielen Bezug genommen.

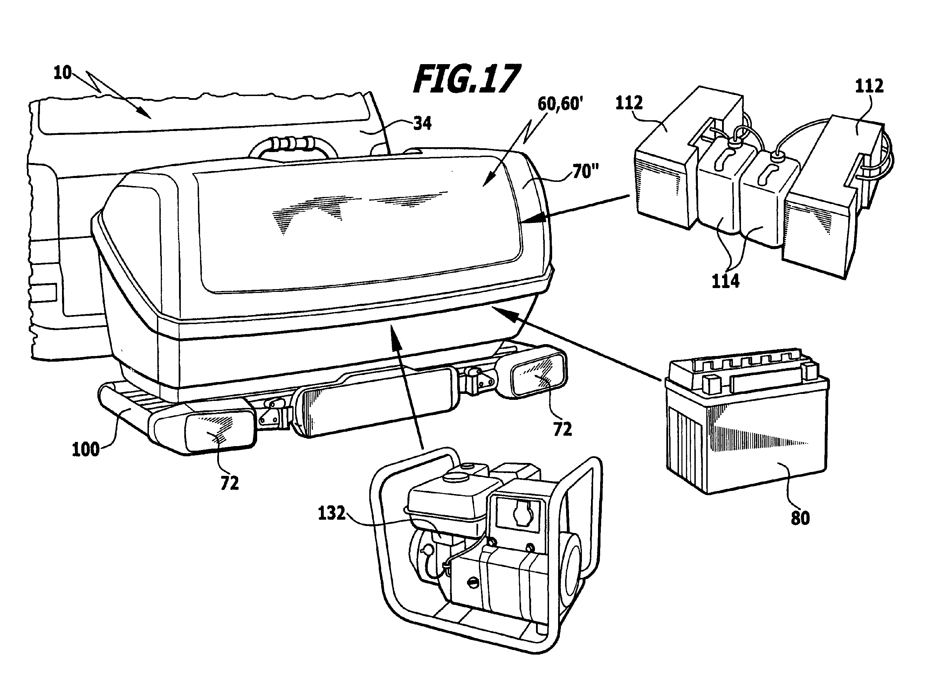

Bei einem achten Ausführungsbeispiel, dargestellt in Fig. 17, ist das Gehäuse 70" als Gehäuse eines üblichen Ladebox-Systems ausgebildet, welches seinerseits mit einem handelsüblichen mechanischen Kopplungssystem 40 an die Karosserie 10 des Kraftfahrzeugs lösbar anbaubar ist.

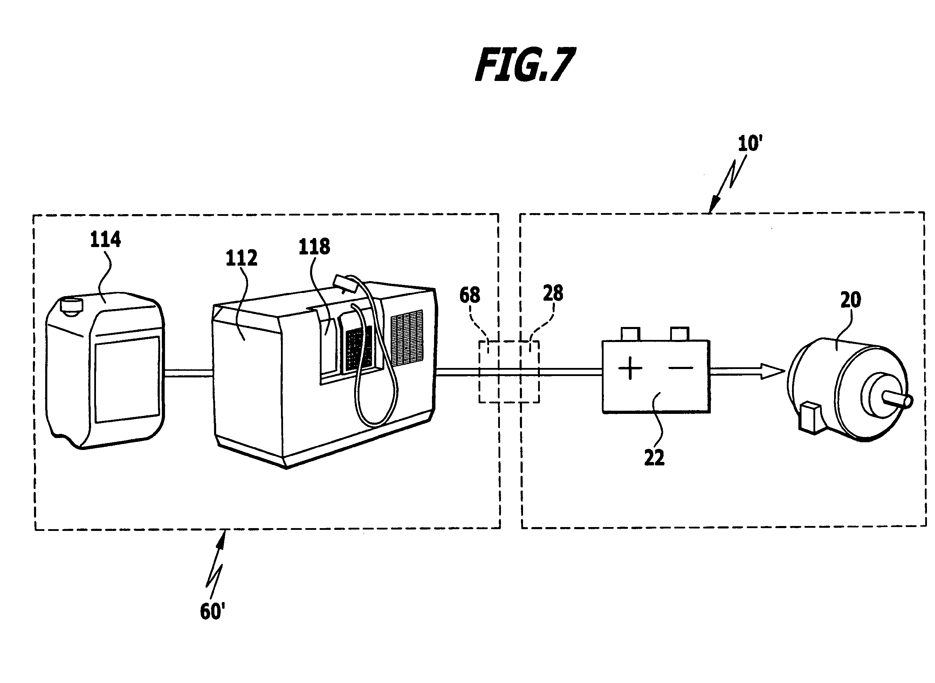

Es besteht die Möglichkeit, eine oder mehrere Brennstoffzellen 112, insbesondere Methanol-Brennstoffzellen, mit dem geeigneten Brennstofftank 114 vorzusehen, wie in Fig. 17 dargestellt, wobei die jeweilige Brennstoffzelle 112 und der Brennstofftank 114 entkoppelt sind, von der in der Karosserie 10 vorgesehenen Batterie 22 und dem Elektromotor 20, wie in Fig. 7 dargestellt und im Zusammenhang mit dieser beschrieben.

Wie in Fig. 17 dargestellt, besteht alternativ oder ergänzend dazu die Möglichkeit, einen Elektrizitätsspeicher in dem Gehäuse 70" vorzusehen.

Ferner besteht, wie in Fig. 17 dargestellt, die Möglichkeit, in dem Gehäuse 70" ein Notstromaggregat oder eine Akkumulator Power Unit als Stromaggregat 132 vorzusehen, um die für das Laden der Batterie 22 notwendige Elektrizität zu erzeugen.

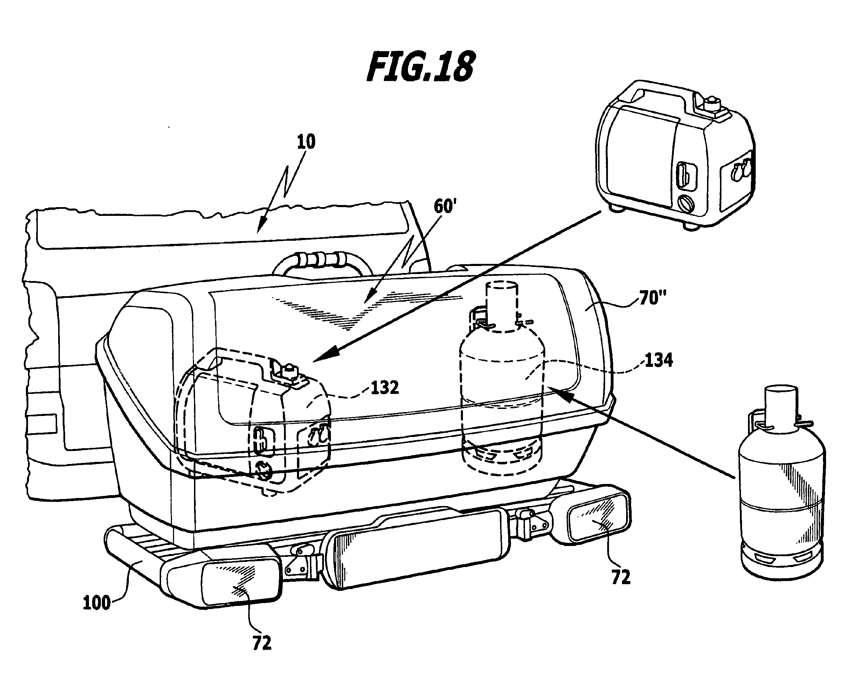

Darüber hinaus besteht die Möglichkeit, in dem Gehäuse 70", wie in Fig. 18 dargestellt, einen auf Gasbetrieb umgerüsteten handelsüblichen Stromgenerator als Heizstromaggregat 132 mit einer Flüssiggasflasche als Brennstofftank 134 vorzusehen.

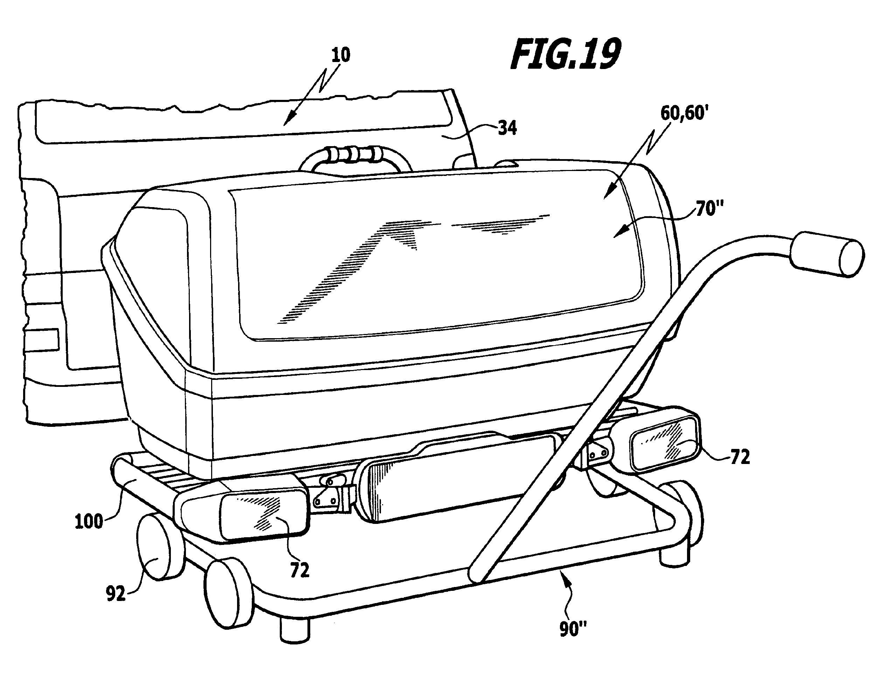

Schließlich besteht noch, wie in Fig. 19 dargestellt, die Möglichkeit, zur vereinfachten Montage des Gehäuses 70" mit den eingebauten Einheiten einen Montagewagen 90" vorzusehen, mit welchem das Gehäuse 70" mechanisch, hydraulisch oder elektrisch hochhebbar und auf Rädern 92 wegfahrbar ist, um das Gehäuse 70" einfach mittels eines im Detail nicht dargestellten mechanischen Kopplungssystems 40 mit der Karosserie 10 zu koppeln.

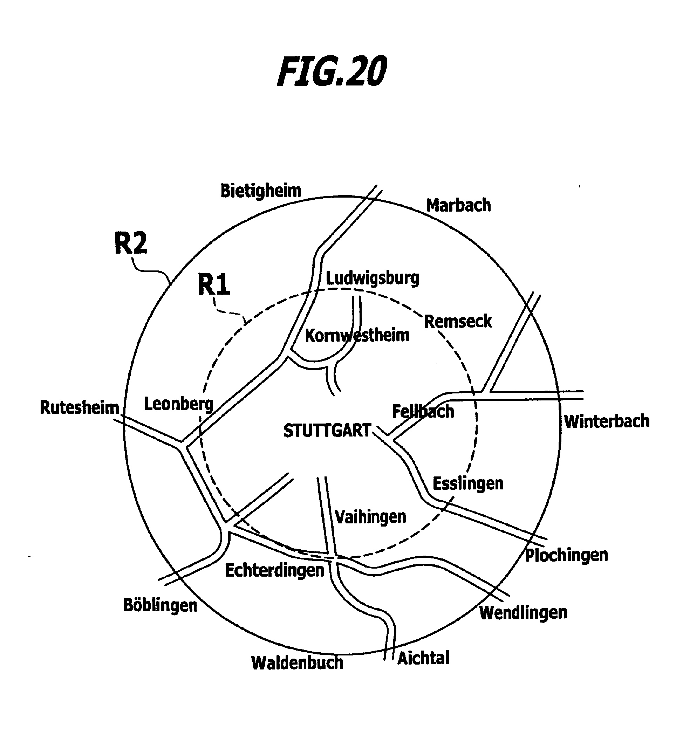

Mit den Energieversorgungseinheiten 60, 60' besteht die Möglichkeit, wie in Fig. 20 dargestellt, im Bedarfsfall die durch die Batterie 22 vorgegebene Reichweite R1 des Fahrzeugs, die beispielsweise für den Stadtverkehr mit dem Fahrzeug ausreichend ist, auf die Reichweite R2, die es erlaubt auch das weitere Umland einer Stadt zu erreichen, auszuweiten.

## Patentansprüche

1. Fahrzeug umfassend eine Karosserie (10), eine Batterie (22) und einen durch die Batterie (22) betreibbaren Elektromotor (20) zum Antreiben des Fahrzeugs in einem Fahrbetrieb, und eine zusätzüche Elektrizitätsversorgungseinheit (60), von welcher Strom zur Erweiterung der Reichweite zur Verfügung gestellt wird,
wobei an einem Heckbereich (30) der Karosserie (10) und hinter dem Heckbereich (30) der Karosserie (10) angeordnet die zusätzüche Elektrizitätsversorgungseinheit (60) mittels eines mechanischen Kopplungssystems (40) lösbar montiert ist und wobei das mechanische Kopplungssystem (40) einen die Elektrizitätsversorgungseinheit (60) tragenden Arm (144) und eine an der Karosserie (10) vorgesehene Aufnahme (142) aufweist, **dadurch gekennzeichnet, dass** der Arm (144) lösbar in der Aufnahme (142) fixierbar ist..

2. Fahrzeug nach Anspruch 1, **dadurch gekennzeichnet, dass** die Elektrlzitätsversorgungseinheit (60) ein Gehäuse (70) umfasst und dass insbesondere das Gehäuse (70) ein definiertes Crashverhalten aufweist.

3. Fahrzeug nach Anspruch 2, **dadurch gekennzeichnet, dass** das Gehäuse (70) eine Bodengruppe (100) aufweist, welche das Crashverhalten des Gehäuses (70) im Wesentlichen definiert.

4. Fahrzeug nach einem der voranstehenden Ansprüche, **dadurch gekennzeichnet, dass** die Elektrizitätsversorgungseinheit (60) mindestens einen Elektrizitätsspeicher (80) umfasst.

5. Fahrzeug nach einem der voranstehenden Ansprüche, **dadurch gekennzeichnet, dass** die Elektrizitätsversorgungseinheit (60) einen Elektrizitätserzeugungsmodul (110) umfasst.

6. Fahrzeug nach Anspruch 5, **dadurch gekennzeichnet, dass** mit dem Elektrizitätserzeugungsmodul (110) ein Ladestrom für die Batterie (22) erzeugbar ist.

7. Fahrzeug nach einem der Ansprüche 5 oder 6, **dadurch gekennzeichnet, dass** das Elektrizitätserzeugungsmodul (110) als Brennstoffzelle (112) ausgebildet ist.

8. Fahrzeug nach einem der Ansprüche 5 bis 7, **dadurch gekennzeichnet, dass** das Elektrizitätserzeugungsmodul (110') als Stromaggregat (132) ausgebildet ist.

9. Fahrzeug nach einem der Ansprüche 5 bis 8, **dadurch gekennzeichnet, dass** dem Elektrizitätserzeugungsmodul (110) eine Steuerung (118, 138) zugeordnet ist, welche den Elektrizitätserzeugungsmodul (110) bei optimalem Wirkungsgrad betreibt.

10. Fahrzeug nach Anspruch 9, **dadurch gekennzeichnet, dass** die Steuerung (118, 138) einen Ladezustand der Batterie (22) überwacht und ein Laden der Batterie (22) steuert.

11. Fahrzeug nach Anspruch 10, **dadurch gekennzeichnet, dass** die Steuerung (118, 138) den Elektrizitätserzeugungsmodul (110) dann einschaltet, wenn der Ladezustand der Batterie (22) ein definierbares Niveau unterschritten hat.

12. Fahrzeug nach einem der voranstehenden Ansprüche, **dadurch gekennzeichnet, dass** in dem Gehäuse (70) eine Temperiereinheit (120) vorgesehen ist und dass insbesondere die Temperiereinheit (120) in dem Gehäuse (70) den Elektrizitätsspeicher (80) und/oder den Elektrizitätserzeugungsmodul (110) in einem definierten Betriebstemperaturbereich arbeiten lässt.

## Claims

1. Vehicle comprising a vehicle body (10), a battery (22) and an electric motor (20) operable by the battery (22) for driving the vehicle in a driving mode, and an additional electricity supply unit (60) for providing current for extending the range, wherein arranged at a rear area (30) of the vehicle body (10) and behind the rear area (30) of the vehicle body (10) the additional electricity supply unit (60) is detachably mounted by means of a mechanical coupling system (40) and wherein the mechanical coupling system (40) has an arm (144) bearing the electricity supply unit (60) and a receptacle (142) provided in the vehicle body (10),
**characterized in that** the arm (144) is releasably fixable in the receptacle (142).

2. Vehicle as defined in claim 1, **characterized in that** the electricity supply unit (60) comprises a housing (70) and that the housing (70), in particular, has a defined crash behaviour.

3. Vehicle as defined in claim 2, **characterized in that** the housing (70) has a base structure (100) essentially defining the crash behaviour of the housing (70).

4. Vehicle as defined in any one of the preceding claim, **characterized in that** the electricity supply unit (60) comprises at least one electricity storage device (80).

5. Vehicle as defined in any one of the preceding claim, **characterized in that** the electricity supply unit (60) comprises an electricity generating module (110).

6. Vehicle as defined in claim 5, **characterized in that** a charging current for the battery (22) is generatable with the electricity generating module (110).

7. Vehicle as defined in either one of claims 5 or 6, **characterized in that** the electricity generating module (100) is designed as a fuel cell (112).

8. Vehicle as defined in any one of claims 5 to 7, **characterized in that** the electricity generating module (110') is designed as a power generator (132).

9. Vehicle as defined in any one of claims 5 to 8, **characterized in that** a control (118, 138) for operating the electricity generating module (110) at optimum efficiency is associated with the electricity generating module (110).

10. Vehicle as defined in claim 9, **characterized in that** the control (118, 138) monitors the state of charge of the battery (22) and controls charging of the battery (22).

11. Vehicle as defined in claim 10, **characterized in that** the control (118, 138) switches on the electricity generating module (110) when the state of charge of the battery (22) has fallen below a definable level.

12. Vehicle as defined in any one of the preceding claims, **characterized in that** a temperature-control unit (120) is provided in the housing (70) and that, in particular, the temperature-control unit (120) in the housing (70) allows the electricity storage device (80) and/or the electricity generating module (110) to operate in a defined operating temperature range.

## Revendications

1. Véhicule comprenant une carrosserie (10), une batterie (22) et un moteur électrique (20) pouvant fonctionner grâce à la batterie (22) et servant à entraîner le véhicule dans une mode de marche, et une unité d'alimentation en électricité (60) supplémentaire, laquelle fournit du courant afin de prolonger l'autonomie du véhicule,
dans lequel l'unité d'alimentation en électricité (60) supplémentaire, qui est disposée au niveau de la zone arrière (30) de la carrosserie 10) et derrière la zone arrière (30) de la carrosserie (10), est montée de manière amovible au moyen d'un système de couplage (40) mécanique, et dans lequel le système de couplage (40) mécanique présente un bras (144) supportant l'unité d'alimentation en électricité (60) et un logement (142) prévu au niveau de la carrosserie (10), **caractérisé en ce que** le bras (144) peut être fixé de manière amovible dans le logement (142).

2. Véhicule selon la revendication 1, **caractérisé en ce que** l'unité d'alimentation en électricité (60) comprend un boîtier (70), et **en ce qu'**en particulier le boîtier (70) présente un comportement défini en cas de collision.

3. Véhicule selon la revendication 2, **caractérisé en ce que** le boîtier (70) présente un dessous de caisse (100), qui définit essentiellement le comportement du boîtier (70) en cas de collusion.

4. Véhicule selon l'une quelconque des revendications précédentes, **caractérisé en ce que** l'unité d'alimentation en électricité (60) comprend au moins un accumulateur d'électricité (80).

5. véhicule selon l'une quelconque des revendications précédentes, **caractérisé en ce que** l'unité d'alimentation en électricité (60) comprend un module de production d'électricité (110).

6. Véhicule selon la revendication 5, **caractérisé en ce qu'**un courant de charge peut être produit pour la batterie (22) avec le module de production d'électricité (110).

7. Véhicule selon l'une quelconque des revendications 5 ou 6, **caractérisé en ce que** le module de production d'électricité (100) est réalisé sous la forme d'une pile à combustible (112).

8. Véhicule selon l'une quelconque des revendications 5 à 7, **caractérisé en ce que** le module de production d'électricité (110') est réalisé sous la forme d'un groupe électrogène (132).

9. Véhicule selon l'une quelconque des revendications 5 à 8, **caractérisé en ce qu'**une commande (118, 138) est associée au module de production d'électricité (110), laquelle fait fonctionner le module de production d'électricité (110) pour un rendement optimal.

10. Véhicule selon la revendication 9, **caractérisé en ce que** la commande (118, 138) surveille un état de charge de la batterie (22) et commande un chargement de la batterie (22).

11. Véhicule selon la revendication 10, **caractérisé en ce que** la commande (118, 138) met en service le module de production d'électricité (110) lorsque l'état de charge de la batterie (22) est inférieur à un niveau pouvant être défini.

12. Véhicule selon l'une quelconque des revendications précédentes, **caractérisé en ce qu'**une unité de régulation de température (120) est prévue dans le boîtier (70), et **en ce qu'**en particulier l'unité de régulation de température (120) fait fonctionner dans le boîtier (70) l'accumulateur d'électricité (80) et/ou le module de production d'électricité (110) dans une plage définie de température de fonctionnement.
